# EUROPÄISCHE PATENTSCHRIFT

(11) **EP 1 169 582 B1**
(45) Veröffentlichungstag und Bekanntmachung des Hinweises auf die Patenterteilung: **07.08.2002**
(21) Anmeldenummer: 00925208.1
(22) Anmeldetag: 13.04.2000
(51) Int. Cl.: F16H 3/54, F16H 61/32

(54) **SCHALTEINRICHTUNG EINES ZWEISTUFIGEN PLANETENGETRIEBES**
SWITCHING DEVICE OF A TWO-STAGE PLANETARY GEAR
DISPOSITIF DE COMMANDE DE BOITE PLANETAIRE A DEUX VITESSES

(30) Priorität: 19.04.1999 DE 19917673
(43) Veröffentlichungstag der Anmeldung: 09.01.2002
(73) Patentinhaber: ZF FRIEDRICHSHAFEN Aktiengesellschaft, 88038 Friedrichshafen (DE)
(72) Erfinder: ECKERT, Harald, D-88074 Meckenbeuren (DE)
(86) Internationale Anmeldenummer: EP0003322
(87) Internationale Veröffentlichungsnummer: WO0063589

(56) Entgegenhaltungen:
- EP-A- 0 132 023
- DD-A- 33 668
- DE-B- 1 122 143
- US-A- 5 735 767

## Beschreibung

Die Erfindung betrifft eine Schalteinrichtung eines zweistufigen Planetengetriebes nach dem Oberbegriff von Anspruch 1.

Es ist eine gattungsbildende Schalteinrichtung aus der Betriebsvorschrift 4161 758 002b zu Zweigang-Schaltgetrieben für AC- und DC-Hauptspindelantriebe, 2K10, 2K12, 2K15, 2K20 der ZF Maschinenantriebe GmbH, Februar 1994, bekannt. Das Getriebe wird hauptsächlich in Werkzeugmaschinenantrieben, Dreh-, Fräs- und Bearbeitungszentren verwendet. Als Antriebsmotoren dienen DC/AC-Hauptspindelmotoren. Die Getriebe vergrößern die Leistungsbandbreite der Hauptspindelmotoren, um die Flexibilität der Werkzeugmaschinen bei der Bearbeitung von unterschiedlichen Werkstoffen bzw. Schnittkräften durch hohe Drehmomente oder Drehzahlen zu vergrößern. Die zwei Übersetzungsstufen werden gebildet, indem einerseits die Antriebswelle, die mit einem Sonnenrad verbunden ist, mit einem Hohlrad und andererseits das Hohlrad mit dem Gehäuse gekoppelt werden kann. Ein Planetenträger ist mit der Abtriebswelle verbunden.

Eine Schiebemuffe dient als axial bewegliches Verbindungsteil zwischen dem Hohlrad und dem Sonnenrad bzw. zwischen dem Hohlrad und dem Gehäuse. Sie ist über eine Schaltgabel mit einer elektrischen Schalteinheit verbunden. Diese umfaßt einen Schneckenantrieb und eine Rutschkupplung und wird von einem Gleichstrommotor angetrieben, der achsparallel zur Antriebswelle angeordnet ist und stirnseitig über das Getriebegehäuse hinausragt. Der Schneckenantrieb lenkt die rotierende Bewegung auf eine vertikale Schaltwelle um, die über ein Ritzel und eine Zahnstange die rotierende Bewegung in eine lineare Bewegung umsetzt. Diese wird über ein Schaltelement auf die Schiebemuffe übertragen. Zur Endlagenerkennung dienen zwei Endlagenschalter in der Schaltungseinheit, die zusammen mit dem Endlagenanschlag in der Schaltung eingestellt werden müssen. Die Schalteinrichtung ist aufwendig und es ist schwierig, sie bei veränderten Anwendungsfällen den räumlichen und antriebsseitigen Anforderung anzupassen.

Es ist ferner aus der DE 196 28 642 C2 eine elektromechanische Schaltvorrichtung für Wechselgetriebe von Kraftfahrzeugen bekannt, bei der ein Anker eines Elektromagneten über eine als Umlenkhebel wirkende Schaltscheibe auf eine Schiebemuffe wirkt. Die Schaltscheibe kann in den verschiedenen Schaltpositionen durch einen Riegelmagneten verrastet werden. Die Betätigungsstange des Ankers kann auch unmittelbar an einer Gabel der Schiebemuffe angreifen.

Aus der DD 33 668 ist insbesondere für Kraftfahrzeuge eine elektromechanisch gesteuerte Schaltvorrichtung für Zahnräderwechselgetriebe bekannt. Zwei Federn zentrieren über zwei Anker zweier Elektromagnete ein Getriebeschaltglied in seiner Mittelstellung. Durch entsprechende unterschiedliche Ansteuerung der Elektromagnete können zwei andere Schaltgassen vorgewählt und positioniert werden. Da die Elektromagnete im Schaltzustand gegen zwei Federn arbeiten, ist der Stromverbrauch im geschalteten Zustand beträchtlich und der Wirkungsgrad nicht zufriedenstellend.

Der Erfindung liegt die Aufgabe zugrunde, eine einfache Schalteinrichtung zu schaffen, die ohne großen Aufwand an verschiedene Einsatzfälle und Betriebsverhältnisse angepaßt werden kann. Sie wird gemäß der Erfindung durch die Merkmale des Anspruchs 1 gelöst.

Nach der Erfindung ist das Stellglied ein Elektromagnet, dessen Anker triebmäßig mit der Schiebemuffe verbunden ist. Da der Elektromagnet im Vergleich zu einem Schnekkenantrieb keine Selbsthemmung besitzt, weist der Elektromagnet Rastelemente auf, die den Anker in den Schaltstellungen verrasten.

Weitere Ausgestaltungen ergeben sich aus den Unteransprüchen. Die Rastelemente können federbelastete Kugelelemente sein. Um die Sicherheit zu erhöhen, ist es jedoch vorteilhaft, daß als Rastelemente Riegelmagnete verwendet werden, durch die eine formschlüssige Rastverbindung gebildet wird.

Der Elektromagnet wird zweckmäßigerweise am Umfang des Getriebegehäuses achsparallel zur Antriebswelle und zur Schaltrichtung angebracht. Seine Länge soll das Getriebegehäuse des schmal bauenden Planetengetriebes nicht überragen, damit das Getriebe mit Elektromotoren kombiniert werden kann, die unterschiedliche Durchmesser besitzen und gegebenenfalls die Querschnittkontur des Getriebegehäuses überragen. Ferner lassen sich mit einem Elektromagneten kurze Schaltzeiten erreichen.

Gemäß einer Ausgestaltung ist zwischen dem Elektromagneten und der Schiebemuffe ein zweiarmiger Hebel vorgesehen, der am Getriebegehäuse drehbar gelagert und mit einem Arm am Anker sowie mit dem anderen Arm an der Schiebemuffe angelenkt ist. Durch unterschiedliche Hebelarme können die Schaltkraft und der Schaltweg modifiziert werden. Dabei ist es zweckmäßig, zwischen dem Getriebegehäuse und dem Elektromagneten ein Adaptionsstück anzuordnen, in dem der Hebel gelagert ist. Dadurch kann der Bereich zur Variation der Hebelverhältnisse deutlich vergrößert werden.

Um die Reibung zwischen dem Hebel und der Schiebemuffe zu verringern, ist es zweckmäßig, daß die Schiebemuffe einen äußeren und einen inneren Teil hat. Der äußere Teil ist über einen axialen Führungsbolzen drehfest, aber axial verschiebbar am Getriebegehäuse geführt und mit einem Wälzlager auf dem inneren Teil drehbar gelagert. So entsteht zwischen dem Hebel und dem äußeren Teil der Schiebemuffe keine rotierende Relativbewegung, die sich auf die Schaltkräfte auswirken könnte. Der innere Teil, der die axiale Bewegung zwangsweise mitmacht, besitzt eine äußere Kuppelverzahnung zur Ankoppelung an das Getriebegehäuse und eine innere Kupplungsverzahnung zur triebmäßigen Verbindung mit dem Sonnenrad.

Da der Elektromagnet den Endanschlag beinhaltet, können die Endlagenschalter entfallen und müssen nicht mehr eingestellt werden. Durch diese Maßnahmen werden Verstellund Fehlermöglichkeiten beim Endkunden vermieden. Zur Sicherheit ist es jedoch zweckmäßig, Endlagenschalter zur Überwachung der Schaltpositionen und Schaltfunktionen vorzusehen, diese brauchen aber nicht justiert zu werden.

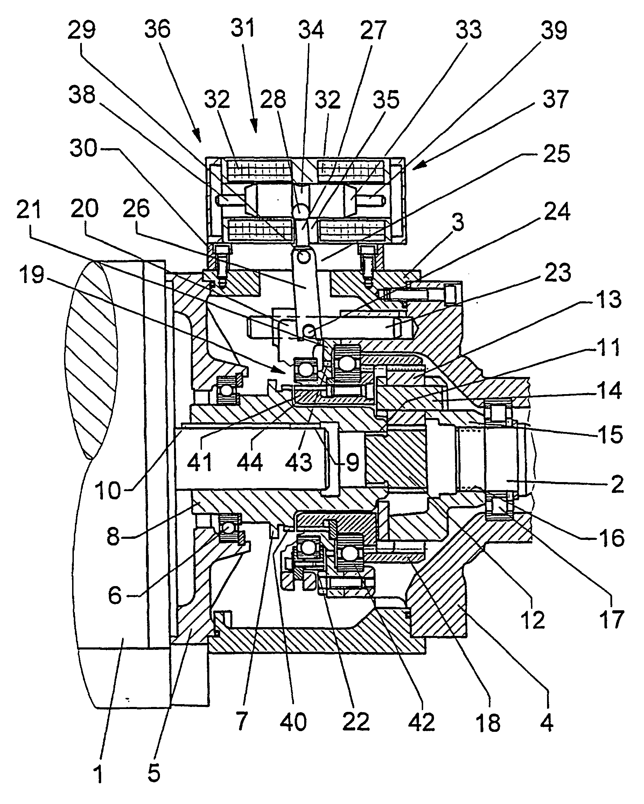

Weitere Vorteile ergeben sich aus der folgenden Zeichnungsbeschreibung. In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Die einzige Figur zeigt einen teilweisen Längsschnitt durch ein zweistufiges Planetengetriebe mit einer erfindungsgemäßen Schalteinrichtung.

Das zweistufige Planetengetriebe besitzt eine Antriebswelle 1 und eine Abtriebswelle 2, die in Lagerdekkeln 4 und 5 eines Getriebegehäuses 3 durch Wälzlager 6 und 17 gelagert sind. Zum Planetengetriebe gehört ein mit der Antriebswelle 1 triebmäßig verbundenes Sonnenrad 12, das mit Planetenrädern 13 kämmt. Diese sind auf Pianetenbolzen 14 in einem Planetenträger 15 gelagert, der über eine Formschlußverbindung 16 mit der Abtriebswelle 2 verbunden ist. Die Planetenräder 13 kämmen mit einem Hohlrad 18, das über ein Wälzlager 42 im Gehäuse 3 drehbar gelagert und formschlüssig mit einem Koppelteil 41 verbunden ist. Das Koppelteil 41 ist über eine äußere Kuppelverzahnung 44 mit einem inneren Teil 21 einer Schiebemuffe 19 drehfest verbunden. Auf ihm ist ein äußeres Teil 20 einer Schiebemuffe 19 mittels eines Wälzlagers 22 gelagert. Das äußere Teil 20 ist im Gehäuse 3 axial verschiebbar auf einem Lagerbolzen 23 geführt, wobei die axiale Verschiebung vom äußeren Teil über das Wälzlager 22 auf das innere Teil 21 übertragen wird.

Die Schiebemuffe 19 kann drei Schaltstellungen einnehmen, und zwar eine Neutralstellung, eine erste Schaltstellung, bei der sie das Hohlrad 18 über eine Kuppelverzahnung 43 mit dem Gehäuse 3 koppelt und eine zweite Schaltstellung, bei der sie das Hohlrad 18 über ein Kuppelteil 8 mit einer Mitnahmeverzahnung 40 und einer Formschlußverbindung 11 mit dem Sonnenrad 12 koppelt. Ein Anschlag 7 am Kuppelteil 8 begrenzt die axiale Verschiebemöglichkeit der Schiebemuffe 19. Das Kuppelteil 8 ist mit der Antriebswelle 1 durch eine Nut 9 und eine Feder 10 drehfest verbunden.

An dem äußeren Teil 20 der Schiebemuffe 19 ist ein Hebel 25 angelenkt, indem ein gabelförmig endender innerer Arm 26 des Hebels 25 einen Querstift 24 umfaßt, der im äußeren Teil 20 vorgesehen ist. Der Hebel 25 ist seinerseits auf einem Lagerbolzen 29 drehbar gelagert, der in einem Adaptionsstück 30 zwischen dem Getriebegehäuse 3 und einem Elektromagneten 31 angeordnet ist.

Der Elektromagnet 31 ist achsparallel zur Antriebswelle 1 und Schaltrichtung am Umfang des Getriebegehäuses 3 über das Adaptionsstück 30 befestigt. Er besitzt Magnetspulen 32, die einen Anker 33 umgeben, der entsprechend der Polung und Bestromung der Magnetspulen 32 axial verstellt und in den Schaltpositionen durch nicht näher dargestellte Rastelemente, z.B. federbelastete Kugelrasten oder vorteilhafterweise durch formschlüssige Riegelmagnete, verrastet ist. Der Anker 33 weist an seinen Stirnflächen Stifte 38, 39 auf, die mit Positionsschaltern 36, 37 zusammenwirken und die Schaltpositionen und damit die Funktion der Schalteinrichtung überwachen. Bei Fehlermeldungen wird durch geeignete, nicht näher dargestellte Mittel ein Alarm ausgelöst und/oder die Maschine stillgesetzt.

Ein zweiter Arm 27 des Hebels 25 ist triebmäßig mit dem Anker 33 verbunden, indem er durch eine Öffnung 35 der Magnetspule 32 in eine Querbohrung 34 des Ankers 33 mit einem Kugelkopf 28 eingreift.

### Bezugszeichen

- 1: Antriebswelle
- 2: Abtriebswelle
- 3: Getriebegehäuse
- 4: Lagerdeckel
- 5: Lagerdeckel
- 6: Wälzlager
- 7: Anschlag
- 8: Kuppelteil
- 9: Nut
- 10: Feder
- 11: Formschlußverbindung
- 12: Sonnenrad
- 13: Planetenrad
- 14: Planetenbolzen
- 15: Planetenträger
- 16: Formschlußverbindung
- 17: Wälzlager
- 18: Hohlrad
- 19: Schiebemuffe
- 20: äußerer Teil
- 21: innerer Teil
- 22: Wälzlager
- 23: Lagerbolzen
- 24: Querstift
- 25: Hebel
- 26: Arm
- 27: Arm
- 28: Kugelkopf
- 29: Lagerbolzen
- 30: Adaptionstück
- 31: Elektromagnet
- 32: Magnetspule
- 33: Anker
- 34: Querbohrung
- 35: Öffnung
- 36: Positionsschalter
- 37: Positionsschalter
- 38: Stift
- 39: Stift
- 40: Mitnahmeverzahnung
- 41: Koppelteil
- 42: Wälzlager
- 43: Kuppelverzahnung
- 44: Kuppelverzahnung

## Patentansprüche

1. Schalteinrichtung eines zweistufigen Planetengetriebes, dessen Antriebswelle (1) mit einem Sonnenrad (12) und dessen Abtriebswelle (2) mit einem Planetenträger (15) verbunden ist, wobei ein Hohlrad (18) des Planetengetriebes über eine Schiebemuffe (19) formschlüssig mit einem Getriebegehäuse (3) oder dem Sonnenrad (12) koppelbar ist und die Schiebemuffe (19) koaxial zur Antriebswelle (1) mittels eines elektrischen Stellglieds (31) in die verschiedenen Schaltpositionen verschiebbar ist, **dadurch gekennzeichnet, daß** das Stellglied (31) ein Elektromagnet ist, dessen Anker (33) triebmäßig mit der Schiebemuffe (19) verbunden ist und daß der Elektromagnet (31) Rastelemente aufweist, die den Anker (33) in den Schaltstellungen verrasten.

2. Schalteinrichtung nach Anspruch 1, **dadurch gekennzeichnet, daß** das Rastelement ein Riegelmagnet ist.

3. Schalteinrichtung nach einem der vorhergehenden Ansprüche, **dadurch gekennzeichnet, daß** der Elektromagnet (31) am Umfang und innerhalb der Länge des Getriebegehäuses (3) achsparallel zur Antriebswelle (1) angeordnet ist.

4. Schalteinrichtung nach einem der vorhergehenden Ansprüche, **dadurch gekennzeichnet, daß** zwischen dem Elektromagneten (31) und der Schiebemuffe (19) ein zweiarmiger Hebel (25) vorgesehen ist, der am Getriebegehäuse (3) drehbar gelagert und mit einem Arm (27) am Anker (33) sowie mit dem anderen Arm (26) an der Schiebemuffe (19) angelenkt ist.

5. Schalteinrichtung nach Anspruch 4, **dadurch gekennzeichnet, daß** die Schiebemuffe (19) einen äußeren Teil (20) hat, der über einen axialen Lagerbolzen (29) drehfest mit dem Getriebegehäuse (3) verbunden und mit einem Wälzlager (22) auf einem inneren Teil (21) drehbar gelagert ist.

6. Schalteinrichtung nach einem der Ansprüche 4 oder 5, **dadurch gekennzeichnet, daß** zwischen dem Getriebegehäuse (3) und dem Elektromagneten (31) ein Adaptionsstück (30) angeordnet ist, in dem der Hebel (25) gelagert ist.

7. Schalteinrichtung nach einem der Ansprüche 4 oder 6, **dadurch gekennzeichnet, daß** der Anker (33) des Elektromagneten (31) eine Querbohrung (34) aufweist, in die ein Arm (27) des Hebels (25) mit einem Kugelkopf (28) eingreift.

8. Schalteinrichtung nach einem der vorhergehenden Ansprüche, **dadurch, gekennzeichnet, daß** die Schaltstellungen durch Positionsschalter überwacht werden.

## Claims

1. Shift mechanism for a dual stage planetary transmission, whose input shaft (1) is connected with the sun gear (12) and whose input shaft (2) is connected with a planetary carrier (15), whereby a ring gear (18) of a planetary transmission can be positively connected via a sliding sleeve (19) with the transmission housing (3) or the sun gear (12) and the sliding sleeve (19) can be coaxially moved to the input shaft (1) into various shift positions by means of an electric actuator (31), **characterized in that** the actuator (31) is an electric solenoid whose armature (33) is positively connected to drive the sliding sleeve (19) and **in that** the electric solenoid (31) contains detent elements which engage the armature (33) in the shift positions.

2. Shift equipment in accordance with claim 1, **characterized in that** the detent element is a detent solenoid.

3. Shift equipment in accordance with one of the preceding claims, **characterized in that** around the circumference and within the length of the transmission housing (3), the electric solenoid (31) is fitted in a parallel configuration relative to the input shaft (1).

4. Shift equipment in accordance with one of the preceding claims, **characterized in that** between the electric solenoid (31) and the sliding sleeve (19), there is a dual-arm lever (25) which is mounted on the transmission housing (3) so that it can rotate and is pivoted with one arm (27) on the armature (33) and the other arm (26) on the sliding sleeve (19).

5. Shift equipment in accordance with claim 4, **characterized in that** the sliding sleeve (19) has an outer section (20) which is connected with the transmission housing (3) via an axial bearing bolt (29) so that it cannot rotate and is fitted to the roller bearing (22) on an inner section (21) which can rotate.

6. Shift equipment in accordance with either claim 4 or 5, **characterized in that** an adapter (30) is fitted between the transmission housing (3) and electric solenoid (31) and houses the lever (25).

7. Shift equipment in accordance with either claim 4 or 6, **characterized in that** the armature (33) of the electric solenoid (31) has a transverse bore (34) into which one arm (27) of the lever (25) extends with a ball head (28).

8. Shift equipment in accordance with one of the preceding claims, **characterized in that** the shift position is monitored by position switches.

## Revendications

1. Dispositif de changement de rapport d'une transmission épicycloïdale à deux étages dont l'arbre d'entrée (1) est relié à une roue planétaire (12) et dont l'arbre de sortie (2) est relié à un porte-satellites (15), une couronne à denture intérieure (18) de la transmission épicycloïdale pouvant être accouplée par une liaison par complémentarité de formes à un carter (3) ou à la roue planétaire (12) au moyen d'un manchon coulissant (19) et le manchon coulissant (19) pouvant être amené par translation coaxiale à l'arbre d'entrée (1) dans les différentes positions de changement de rapport au moyen d'un actionneur électrique (31), **caractérisé en ce que** l'actionneur électrique (31) est un électro-aimant dont l'armature (33) est reliée cinématiquement au manchon coulissant (19), et **en ce que** l'électro-aimant (31) comporte des éléments d'enclenchement qui enclenchent l'armature (33) dans les positions de changement de rapport.

2. Dispositif de changement de rapport selon la revendication 1, **caractérisé en ce que** l'élément d'enclenchement est un aimant de verrouillage.

3. Dispositif de changement de rapport selon l'une des revendications précédentes, **caractérisé en ce que** l'électro-aimant (31) est disposé à la périphérie du carter (3) de la transmission, dans les limites de la longueur de ce dernier et avec son axe parallèle avec celui de l'arbre d'entrée (1).

4. Dispositif de changement de rapport selon l'une des revendications précédentes, **caractérisé en ce qu'**il est prévu, entre l'électro-aimant (31) et le manchon coulissant (19), un levier à deux bras (25) qui est monté rotatif sur le carter (3) de la transmission et qui est articulé à l'armature (33) par un bras (27) et au manchon coulissant (19) par l'autre bras (26).

5. Dispositif de changement de rapport selon la revendication 4, **caractérisé en ce que** le manchon coulissant (19) comporte une partie extérieure (20) qui est reliée solidairement en rotation au carter (3) de la transmission au moyen d'un goujon de portée axial (23) et qui est monté libre en rotation sur une partie intérieure (21) au moyen d'un roulement (22).

6. Dispositif de changement de rapport selon l'une des revendications 4 ou 5, **caractérisé en ce que**, entre le carter (3) de la transmission et l'électro-aimant (31), est disposé un élément adaptateur (30) dans lequel le levier (25) est monté rotatif.

7. Dispositif de changement de rapport selon l'une des revendications 4 ou 6, **caractérisé en ce que** l'armature (33) de l'électro-aimant (31) comporte un perçage transversal (34) dans lequel un bras (27) du levier (25) est engagé par une tête sphérique (28).

8. Dispositif de changement de rapport selon l'une des revendications précédentes, **caractérisé en ce que** les positions de changement de rapport sont contrôlées par des commutateurs de position.
